(19) Europäisches Patentamt

European Patent Office

Office européen des brevets

(11) Numéro de publication : **0 184 531**
**B1**

(12) **FASCICULE DE BREVET EUROPÉEN**

(45) Date de publication du fascicule du brevet :
06.07.88

(51) Int. Cl.⁴ : **H 02 G   7/20, E 04 H 12/24**

(21) Numéro de dépôt : **85420216.5**

(22) Date de dépôt : **03.12.85**

(54) **Armement de ligne électrique aérienne.**

(30) Priorité : 04.12.84 FR 8418945

(43) Date de publication de la demande :
**11.06.86 Bulletin 86/24**

(45) Mention de la délivrance du brevet :
**06.07.88 Bulletin 88/27**

(84) Etats contractants désignés :
**AT BE CH DE GB IT LI LU NL SE**

(56) Documents cités :
DE-A- 1 590 289
FR-A- 1 145 447
FR-A- 1 361 719
FR-A- 1 381 118
FR-A- 2 216 654
GB-A-   917 347
GB-A-   919 534
US-A- 3 299 586

(73) Titulaire : **SKIS ROSSIGNOL S.A.**
**Le Menon Boîte Postale 329**
**F-38509 Voiron Cedex (FR)**

(72) Inventeur : **Woehrle, Maurice**
**28 avenue d'Haussez**
**F-38500 Voiron Isère (FR)**
Inventeur : **Piegay, Yves**
**87 Boulevard de la République**
**F-38500 Voiron Isère (FR)**

(74) Mandataire : **Bratel, Gérard et al**
**Cabinet GERMAIN & MAUREAU Le Britannia - Tour C**
**20, boulevard E. Déruelle**
**F-69003 Lyon (FR)**

## Description

L'invention a pour objet un armement de ligne électrique aérienne, comportant au moins un bras réalisé en un matériau composite isolant, fixé sur un poteau et auquel est relié un conducteur électrique de la ligne, ce bras présentant une section décroissante depuis sa zone de fixation sur le poteau jusqu'à son ou chaque extrémité libre à laquelle un conducteur électrique est suspendu.

Ainsi, l'invention concerne un moyen de support pour les câbles électriques aériens pouvant servir au transport de l'énergie électrique sous basse, moyenne ou haute tension, ce moyen désigné sous le terme « armement » constituant l'intermédiaire entre un poteau ou pylône, d'une part, et un câble d'autre part.

Traditionnellement, un armement est constitué par des armatures réalisées en profilés métalliques comportant à leurs extrémités des moyens d'accrochage pour les câbles électriques. Ces armatures sont rigides et ne subissent aucune déformation, même lorsqu'elles sont soumises à des efforts exceptionnels. Il en résulte, si la ligne électrique est soumise à un effort exceptionnel, ce qui est le cas lors de la surcharge de la ligne par la neige et le givre ou lors de la décharge brutale de neige ou de givre, deux effets :

— soit cet effort provoque la rupture du câble, sur une portée entre deux poteaux, donnant lieu à un déséquilibre des efforts de traction longitudinale sur l'armement ; ce déséquilibre crée un couple de torsion sur le poteau qui entraîne fréquemment sa rupture ;

— soit cet effort est directement transmis au poteau sous forme de couple de torsion pouvant entraîner sa rupture.

Pour écarter ces inconvénients, il a été proposé plusieurs solutions. Une solution est le remplacement des armements métalliques rigides par des armements susceptibles de se déformer de manière permanente (voir brevets français 2 344 991 et 2 466 888). L'armement est dit « fusible » et demande à être remplacé après déformation. Ceci nécessite une surveillance régulière, et une intervention sur la ligne électrique, qui sont fort coûteux.

Une autre solution est un armement métallique articulé (voir brevets français 992893 et 2 407 591). La réalisation de ce type d'armement est coûteuse, et les coûts de maintenance sont élevés.

Le développement des matières plastiques a conduit à l'élaboration de matériel pour lignes électriques d'un type nouveau, réalisés en résines renforcées de fibres de verre.

Il est connu de réaliser des supports ou poteaux avec de tels matériaux (voir brevet français 1 145 447). Il est aussi connu de réaliser les isolateurs de lignes électriques en résine renforcée (voir brevet français 2 216 654).

Il est connu par ailleurs de réaliser des traverses en matériaux isolants pour poteaux de lignes électriques, avec une section décroissante depuis la zone de fixation au poteau jusqu'à l'extrémité ou chaque extrémité libre. Ces traverses sont réalisées soit sous forme de deux demi-coquilles, en matière synthétique enserrant le support (voir brevet allemand 1 590 289), soit sous forme d'isolateur articulé sur le support (voir brevet français 1 361 719). L'armement réalisé en demi-coquilles ne présente pas la flexibilité nécessaire pour préserver le support ou le conducteur en cas de choc sur la ligne ; son mode de réalisation est complexe et ne permet pas d'envisager son exploitation. L'isolateur articulé demande une forte maintenance et des systèmes mécaniques coûteux.

Enfin, on connaît un bras transversal, en résine armée de fibre de verre, se fixant à un pylône et servant à soutenir un conducteur électrique aérien, qui est réalisé d'une seule pièce par exemple par moulage, et qui présente une section décroissante entre sa zone de fixation rigide au pylône et son extrémité libre, à laquelle est suspendu le conducteur. La section décroissante du bras isolant résulte d'une forme d'ensemble conique. Ce bras présente toutefois une symétrie de révolution et une longueur relativement courte comparativement à sa section, de sorte qu'il ne possède pas de propriétés de flexibilité suivant une direction privilégiée de l'espace, correspondant aux sollicitations de la ligne, et que de toute façon sa capacité de déformation est insuffisante (voir brevet français 1 381 118).

L'invention remédie à tous ces inconvénients, en fournissant un armement de ligne électrique à la fois flexible et isolant, de structure simple et capable de résister à des efforts sans risque de rupture ni nécessité de maintenance particulière.

Cet armement est constitué, selon l'invention, par au moins une poutre qui possède une flexibilité longitudinale, c'est-à-dire relativement à la direction du ou des conducteurs électriques suspendus à cette poutre, à caractère réversible et de valeur comprise entre 1 et 15 mm/daN, la ou chaque poutre présentant encore un élancement relatif à son épaisseur, rapport de la longueur de la poutre à l'épaisseur de la section moyenne de celle-ci, compris entre 20 et 100, et présentant un élancement relatif à sa largeur, rapport de la longueur de la poutre à la largeur de la section moyenne de celle-ci, compris entre 2 et 10.

Par flexibilité « réversible », on entend ici le fait que l'armement travaille dans sa zone d'élasticité et après une sollicitation exceptionnelle, revient à sa position moyenne dans les conditions normales de chargement. L'armement est prévu pour ne pas travailler dans la zone de déformation permanente.

La flexibilité « longitudinale », ici considérée, est celle relative à la direction du conducteur électrique supporté par l'intermédiaire de l'armement. Des flexibilités verticales et transversales de l'armement peuvent aussi être définies, mais elles ne font pas l'objet de l'invention et doivent, en toutes circonstances, rester faibles comparativement à la flexibilité longitudinale. Ainsi, l'armement selon la présente invention possède une flexibilité orientée suivant une direction privilégiée.

Cette flexibilité longitudinale réversible relativement importante de la poutre ou de chaque poutre constituant l'armement est, avantageusement, de l'ordre de 5 mm/daN.

Les élancements définis plus haut caractérisent en outre la géométrie particulière de la ou de chaque poutre, et déterminent en partie ses propriétés mécaniques.

Cette ou ces poutres peuvent avoir une section de forme quelconque, pourvu qu'elle procure les caractéristiques dimensionnelles et mécaniques recherchées. Pour des questions de fabrication et de montage, la ou chaque poutre constituant l'armement est de préférence formée par un corps de section décroissante approximativement rectangulaire, la plus grande dimension de cette section s'étendant verticalement. Dans une variante, la section décroissante du corps formant la ou chaque poutre de l'armement est elliptique, également avec sa plus grande dimension orientée verticalement.

Plus particulièrement, cette section décroissante de poutre peut être caractérisée par un coefficient de forme de l'ordre de 5, le coefficient de forme étant défini comme le rapport entre la longueur et la largeur du rectangle exinscrit à la section moyenne de la poutre.

La structure de la poutre ou de chaque poutre constituant l'armement peut être massive ou creuse ; dans le cas d'une poutre creuse, celle-ci peut comporter un garnissage intérieur, par exemple en une matière cellulaire.

Les poutres considérées ou du moins leurs parties porteuses s'il s'agit de poutres creuses avec garnissage intérieur, sont réalisables en stratifiés à base de fibre de verre et d'une matrice en résine synthétique, de type thermodurcissable ou thermoplastique. Les fibres de verre peuvent se présenter sous forme de rovings, de tissus, de tresses. Le roving peut être mis en œuvre par la technique dite d'enroulement filamentaire. La résine est, par exemple, une résine époxy.

Le stratifié à base de fibre de verre présente un allongement à la rupture élevé (de l'ordre de 4 %). La combinaison de cette qualité avec l'élancement de la poutre permet d'obtenir des flexibilités longitudinales réversibles élevées, de l'ordre de 5 mm/daN (valeur indiquée plus haut).

Ces poutres en stratifié de fibre de verre et résine permettent d'assurer la fonction isolante et de supprimer l'isolateur. Pour les tensions de l'ordre de 20 kV, la ligne de fuite de l'armement est largement suffisante et ne nécessite aucun agencement supplémentaire.

Pour éviter des amorçages dus aux eaux de ruissellement, il peut être prévu une ailette réalisée en un matériau synthétique, entourant la poutre dans la zone de montage du conducteur.

Pour éviter une éventuelle dégradation des qualités mécaniques et électriques du stratifié, il est souhaitable d'envelopper la poutre dans un matériau de recouvrement. Ce matériau peut être un éthylène propylène di-monomère (EPDM), un caoutchouc siliconé, un polyuréthane du type « BAYDUR » de CIBA.

Pour éviter des amorçages dus à la pollution (dépôt de poussières conductrices) il est préférable de donner au matériau de recouvrement une forme effilée vers le haut évitant ainsi le dépôt de poussière. Ce matériau de recouvrement peut être collé ou moulé en reprise sur la poutre stratifiée, par exemple par un procédé de gélification sous pression automatique.

La matrice utilisée par la fabrication du stratifié peut être une résine thermodurcissable du type époxy, vinylester, polyuréthane, polyester. Pour augmenter ses qualités de vieillissement sous charge et environnement climatique, il est intéressant de lui adjoindre une charge, par exemple, une farine de silice silanisée.

La matrice du stratifié peut aussi être thermoplastique, par exemple, un polymère aromatique cristallin du type polyéther éther cetone, résine « PEEK » de ICI. Ce type de matrice possède une bonne résistance aux conditions atmosphériques et est moins susceptible à la prise d'humidité que les composites à matrice époxyde.

L'ensimage du fil de verre est choisi pour obtenir une liaison verre-matrice optimum, résistant à l'ambiance climatique extérieure. Ce choix est fait en fonction du type de matrice retenu.

L'orientation des fibres de verre et leurs poids par unité de surface (grammage) sont déterminés à partir des charges appliquées à l'extrémité libre de la poutre : effort vertical dû au poids du conducteur, effort latéral dû au vent, effort longitudinal dû à une dissymétrie de charge du conducteur. Le dimensionnement s'effectue en tenant compte d'une part d'un effort de la limite de fatigue du stratifié dans les conditions climatiques imposées et sous tension et, d'autre part, des phénomènes de fluage affectant le stratifié.

Un autre avantage de l'invention est la grande légèreté de l'armement. Ceci est particulièrement intéressant lors de la manutention, du stockage et du montage sur les poteaux.

Quelle que soit sa forme, la poutre comporte, d'une part, des moyens pour sa fixation sur le poteau et, d'autre part, des moyens pour supporter ou suspendre le conducteur. La poutre ou chaque poutre peut comporter un garnissage ou noyau intérieur moulé, et des pièces insérées à l'intérieur de ce garnissage ou noyau au moulage, ces pièces étant destinées au montage des moyens de fixation de la poutre sur le poteau, ainsi qu'au montage des moyens de support ou de suspension d'un conducteur de la ligne électrique.

Dans un mode de réalisation, l'armement selon l'invention est constitué par une poutre comportant un garnissage ou noyau intérieur et des couches de peaux formées de stratifié de fibre de verre. Ces stratifiés peuvent comporter des tissus ou des nappes de fils unidirectionnels. Des fibres à 45° sont recommandées pour résister aux efforts composés de flexion ou dans le cas de flexion déviée. Le garnissage intérieur ou noyau peut être constitué d'un matériau synthétique cellulaire : par exemple mousse de polyuréthane, mousse époxy ou mousse phénolique.

L'assemblage des peaux et du noyau peut s'effectuer soit par voie humide (imprégnation du verre par de la résine) soit par collage de stratifiés prépolymérisés, soit par l'utilisation de préimprégnés. L'assemblage s'effectue généralement sous presse à chaud.

Les zones d'application des charges peuvent être renforcées par des tissus de verre, ceci afin d'éviter les phénomènes de poinçonnage et de matage de la surface. Le pressage contre un moule permet d'obtenir des surfaces planes qui assurent une application parfaite des forces.

Un autre mode de réalisation de l'armement selon l'invention consiste à accoler des éléments de poutres de longueurs différentes, obtenus par exemple par pultrusion, qui sont assemblés les uns contre les autres avec les extrémités d'un élément décalées par rapport à celles d'un autre élément. Une réalisation avantageuse consiste à coller des lames de stratifié sur un profil en caisson creux. Cette réalisation permet d'optimiser l'emploi de la matière.

La fixation de cette poutre sur le poteau est obtenue par bridage de la poutre contre l'une des faces du poteau au moyen de boulons qui serrent le poteau entre la poutre et une bride prenant appui sur la face opposée du poteau. La poutre comportant intérieurement un garnissage ou noyau obtenu par moulage en résine synthétique, le moulage de ce noyau est mis à profit pour positionner à l'intérieur de la poutre un insert métallique en forme de plaque qui est traversé par les boulons et contribue ainsi à la bonne fixation de l'armement sur le poteau.

De toute façon, l'invention sera bien comprise à l'aide de la description qui suit, en référence au dessin schématique annexé représentant, à titre d'exemples non limitatifs, quelques formes d'exécution de cet armement de ligne électrique aérienne :

Figure 1 est une vue en perspective montrant la partie supérieure d'un poteau de ligne électrique, supportant un armement conforme à l'invention, composé d'un bras simple et d'un bras double ;

Figure 2 est une vue de face, en élévation, d'une réalisation particulière de poutre pouvant constituer le bras double de l'armement de figure 1 ;

Figure 3 est en vue en coupe transversale de cette poutre, suivant 3-3 de figure 2 ;

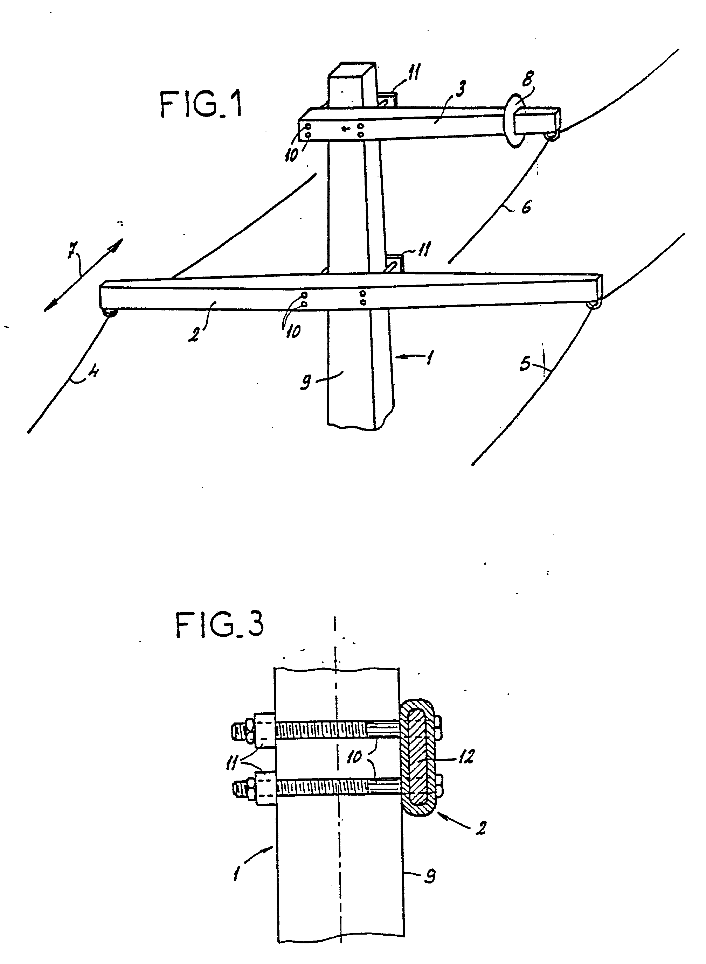

Sur la figure 1, le repère (1) désigne un poteau de ligne électrique, par exemple en béton armé, à la partie supérieure duquel est fixé un armement constitué par deux poutres horizontales (2, 3).

La première poutre (2), relativement longue, est placée symétriquement par rapport au poteau (1), et elle supporte par ses extrémités deux conducteurs (4, 5) de la ligne électrique. L'autre poutre (3), plutôt courte et située au-dessus de la précédente, s'étend dissymétriquement sur un seul côté du poteau (1) et elle supporte par son extrémité libre le troisième conducteur (6) de la ligne électrique.

Les deux poutres (2, 3) présentent chacune une section approximativement rectangulaire variable, décroissante depuis leurs zones de fixation respectives au poteau (1) jusqu'à leurs extrémités éloignées du poteau, où les conducteurs (4, 5, 6) sont suspendus. La plus grande dimension de la section rectangulaire s'étend verticalement (voir figure 3).

Pour les deux poutres (2, 3), le coefficient de forme de la section, c'est-à-dire le rapport entre la longueur et la largeur du rectangle exinscrit à la section moyenne, est de l'ordre de 5.

L'élancement relatif à l'épaisseur peut être de 70 pour la poutre simple (3), et de 140 pour la poutre double (2). L'élancement relatif à la largeur des poutres (2, 3) peut être égal à 15.

Ces poutres (2, 3) présentent une flexibilité longitudinale réversible relativement importante, de l'ordre de 5 mm/daN. Il s'agit de la flexibilité relativement à la direction des conducteurs (4, 5, 6) de la ligne électrique. La direction de cette flexibilité, et son caractère réversible, sont indiqués par une flèche double (7) — voir figure 1.

Les poutres (2, 3) sont réalisées en stratifié à base de fibres de verre et de résine synthétique, leur conférant non seulement les qualités mécaniques désirées, mais les rendant aussi isolantes d'un point de vue électrique. Pour améliorer encore l'isolation électrique et éviter des amorçages dus aux eaux de ruissellement, au moins une ailette (8) réalisée en matériau synthétique peut entourer les poutres dans les zones de montage des conducteurs, comme indiqué sur la figure 1 pour la poutre (3) dans la zone de suspension du conducteur correspondant (6).

La fixation de chaque poutre (2, 3), sur le poteau (1) est obtenue par bridage de la poutre (2, 3) contre l'une des faces (9) du poteau au moyen de boulons (10), qui serrent le poteau (1) entre la poutre (2, 3) et une bride ou des brides (11) prenant appui sur la face opposée du poteau - voir aussi figure 3.

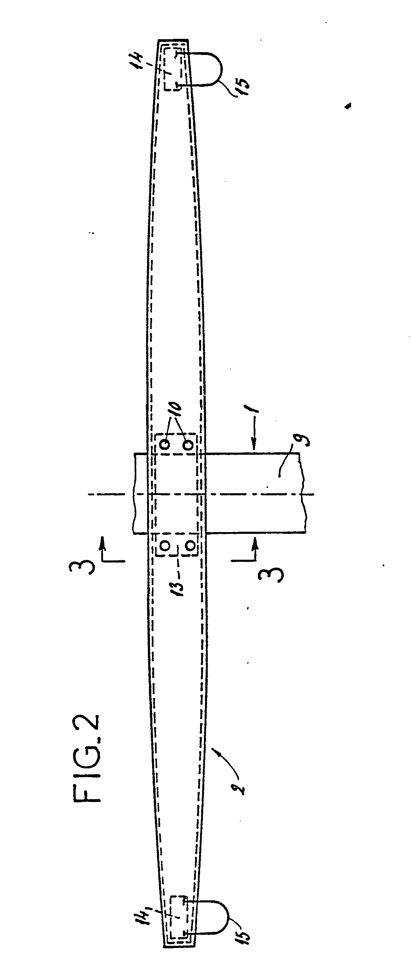

Dans un mode de réalisation particulier, illustré par les figures 2 et 3 pour la poutre (2) mais applicable aussi à la poutre (3), la poutre est creuse et comporte un garnissage ou noyau intérieur moulé (12), en matériau synthétique. Des inserts métalliques (13, 14) sont positionnés et noyés dans le garnissage intérieur (12), au milieu de la poutre (2) ainsi que vers ses extrémités. L'insert métallique central (13), en forme de plaque, est traversé par les boulons (10) de fixation de la poutre (2) sur le poteau (1). Les inserts métalliques extrêmes (14) supportent les moyens d'accrochage (15) qui soutiennent les deux conducteurs (4, 5) suspendus sous la poutre (2).

Quels que soient ses détails de réalisation, un armement conforme à la présente invention possède une flexibilité longitudinale, à caractère réversible, de valeur adaptée lui permettant de résister à des sollicitations dans la direction de la ligne électrique aérienne, sans risque de rupture du poteau (1) et en évitant aussi toute déformation permanente de l'armement lui-même. De plus, cet armement est léger de par son matériau et il assure par lui-même l'isolation des conducteurs (4, 5, 6) de la ligne.

La section approximativement rectangulaire des poutres (2, 3) peut être remplacée par une section oblongue, ou elliptique ou autre, toujours décroissante vers la ou chaque extrémité libre, et procurant les mêmes caractéristiques dimensionnelles et mécaniques, concernant notamment les élancements et la flexibilité longitudinale.

## Revendications

1. Armement de ligne électrique aérienne, comportant au moins un bras réalisé en un matériau composite isolant, fixé sur un poteau (1) et auquel est relié un conducteur électrique (4, 5, 6) de la ligne, ce bras présentant une section décroissante depuis sa zone de fixation sur le poteau (1) jusqu'à son ou chaque extrémité libre à laquelle le conducteur électrique (4, 5, 6) est suspendu, caractérisé en ce qu'il est constitué par au moins une poutre (2, 3) qui possède une flexibilité longitudinale (flèche 7), c'est-à-dire relativement à la direction du ou des conducteurs électriques (4, 5, 6) suspendus à cette poutre, à caractère réversible et de valeur comprise entre 1 et 15 mm/daN, la ou chaque poutre (2, 3) présentant encore un élancement relatif à son épaisseur, rapport de la longueur de la poutre à l'épaisseur de la section moyenne de celle-ci, compris entre 20 et 100, et présentant un élancement relatif à sa largeur, rapport de la longueur de la poutre à la largeur de la section moyenne de celle-ci, compris entre 2 et 10.

2. Armement de ligne électrique aérienne selon la revendication 1, caractérisé en ce que la flexibilité longitudinale réversible de la poutre ou de chaque poutre (2, 3) le constituant est de l'ordre de 5 mm/daN.

3. Armement de ligne électrique selon la revendication 1 ou 2, caractérisé en ce que le coefficient de forme de la section décroissante de la ou de chaque poutre (2, 3) le constituant, c'est-à-dire le rapport entre la longueur et la largeur du rectangle exinscrit à la section moyenne de la poutre (2, 3), est de l'ordre de 5.

4. Armement de ligne électrique aérienne selon l'une quelconque des revendications 1 à 3, caractérisé en ce que la ou chaque poutre (2, 3) le constituant est formé par un corps creux de section décroissante approximativement rectangulaire, dont la plus grande dimension s'étend verticalement.

5. Armement de ligne électrique aérienne selon l'une quelconque des revendications 1 à 3, caractérisé en ce que la ou chaque poutre (2, 3) le constituant est formé par un corps creux de section décroissante elliptique, dont la plus grande dimension s'étend verticalement.

6. Armement de ligne électrique aérienne selon l'une quelconque des revendications 1 à 5, caractérisé en ce qu'il est constitué par des éléments de poutres accolés, de longueurs différentes, qui sont assemblés les uns contre les autres avec les extrémités d'un élément décalées par rapport à celles d'un autre élément.

7. Armement de ligne électrique aérienne selon l'une quelconque des revendications 1 à 6, caractérisé en ce que la poutre ou chaque poutre (2) comporte un garnissage ou noyau intérieur moulé (12), et des pièces (13, 14) insérées à l'intérieur de ce garnissage ou noyau (12) au moulage, ces pièces (13, 14) étant destinées au montage des moyens de fixation (10) de la poutre (3) sur le poteau (1), ainsi qu'au montage des moyens de support ou de suspension (15) d'un conducteur (4, 5) de la ligne électrique.

## Claims

1. Mounting gear for an overhead electric power line, comprising at least one arm produced from a composite insulating material, fitted to a post (1), and to which an electrical conductors (4, 5, 6) of the power line is linked, this arm exhibiting a cross-section decreasing from its area of attachment to the post (1) to its free end or each free end from which the electrical conductor (4, 5, 6) is suspended, characterized in that it consists of at least one beam (2, 3) that possesses longitudinal flexibility (arrow 7), i. e. flexibility relatively to the direction of the electrical conductor or conductors (4, 5, 6) suspended from this beam, of a reversible nature and of a value between 1 and 15 mm/decanewton (daN), the beam or each beam (2, 3) furthermore extending outwards proportionately to its thickness, the ratio of the length of the beam to the thickness of its midsection being between 20 and 100, and extending outwards proportionately to its breadth, the ratio of the length of the beam to the breadth of its midsection being between 2 and 10.

2. Mounting gear for an overhead electric power line according to Claim 1, characterized in that the reversible longitudinal flexibility of the beam or each beam (2, 3) of which it consists is of the order of 5 mm/daN.

3. Mounting gear for an overhead electric power line according to Claim 1 or 2, characterized in that the shape coefficient of the decreasing cross-section of the beam or each beam (2, 3) of which it consists, i. e. the ratio of the length to the breadth of the rectangle containing the mid-section of the beam (2, 3) is of the order of 5.

4. Mounting gear for an overhead electrical power line according to any of Claims 1 to 3, characterized in that the beam or each beam (2, 3) of which it consists is formed by a hollow body of approximately rectangular decreasing section, the larger dimension of which section extends vertically.

5. Mounting gear for an overhead electric

power line according to any of Claims 1 to 3, characterized in that the beam or each beam (2, 3) of which it consists is formed by a hollow body of decreasing elliptical section, the major axis of which section extends vertically.

6. Mounting gear for an overhead electric power line according to any of Claims 1 to 5, characterized in that it is formed by attached beam units of different lengths, which are assembled relatively to one another with the ends of one unit displaced relatively to those of another unit.

7. Mounting gear for an overhead electric power line according to any of Claims 1 to 6, characterized in that the beam or each beam (2, 3) comprises an interior moulded packing or core (12) and pieces (13, 14) inserted within this packing or core (12) during moulding, these pieces (13, 14) being for the purpose of mounting the means (10) of fixing the beam (3) to the post (1), and also mounting the means (15) of support or suspension (15) of a conductor (4, 5) of the electric power line.

## Patentansprüche

1. Ausrüstung für eine elektrische Freileitung mit wenigstens einem aus einem isolierenden Verbundwerkstoff bestehenden Arm, der an einem Mast (1) befestigt ist und mit dem ein elektrischer Leiter (4, 5, 6) der Leitung verbunden ist, wobei der Querschnitt dieses Arms von dem Bereich aus, in dem er an dem Mast (1) befestigt ist, zu seinem freien Ende bzw. zu jedem seiner freien Enden hin, an dem der elektrische Leiter (4, 5, 6) aufgehängt ist, abnimmt, dadurch gekennzeichnet, daß die Ausrüstung aus wenigstens einem Querträger (2, 3) besteht, der in Längsrichtung (Pfeil 7), d. h. bezüglich der Richtung des oder der an ihm aufgehängten elektrischen Leiter (4, 5, 6) eine reversible Flexibilität besitzt, deren Größe zwischen 1 und 15 mm/daN liegt, und daß der oder jeder Querträger bezogen auf seine Dicke einen Schlankheitsgrad, d. h. ein Verhältnis von Länge zu Dicke seines mittleren Querschnitts hat, der zwischen 20 und 100 liegt, und bezogen auf seine Breite einen Schlankheitsgrad, d. h. ein Verhältnis seiner Länge zur Breite seines mittleren Querschnitts, der zwischen 2 und 10 liegt.

2. Ausrüstung für eine elektrische Freileitung nach Anspruch 2, dadurch gekennzeichnet, die reversible Flexibilität des oder jedes die Ausrüstung bildenden Querträgers (2, 3) in Längsrichtung in der Größenordnung von 5 mm/daN liegt.

3. Ausrüstung für eine elektrische Freileitung nach Anspruch 1 oder 2, dadurch gekennzeichnet, daß der Formkoeffizient des abnehmenden Querschnitts des oder jedes Querträgers (2, 3), d. h. das Verhältnis zwischen der Länge und der Breite des dem mittleren Querschnitt des Querträgers (2, 3) umschriebenen Rechtecks in der Größenordnung von 5 liegt.

4. Ausrüstung für eine elektrische Freileitung nach einem der Ansprüche 1 bis 3, dadurch gekennzeichnet, daß der oder jeder Querträger (2, 3) von einem Hohlkörper mit abnehmendem, annähernd rechteckigem Querschnitt gebildet ist, dessen längste Seite in vertikaler Richtung erstreckt.

5. Ausrüstung für eine elektrische Freileitung nach einem der Ansprüche 1 bis 3, dadurch gekennzeichnet, daß der oder jeder Querträger (2, 3) von einem Hohlkörper mit abnehmendem elliptischem Querschnitt gebildet ist, dessen größte Achse in vertikaler Richtung verläuft.

6. Ausrüstung für eine elektrische Freileitung nach einem der Ansprüche 1 bis 5, dadurch gekennzeichnet, daß sie aus verleimten Querträgerelementen unterschiedlicher Länge besteht, die derart zusammengefügt sind, daß die Enden eines Elements gegenüber den Enden eines anderen Elements versetzt sind.

7. Ausrüstung für eine elektrische Freileitung nach einem der Ansprüche 1 bis 6, dadurch gekennzeichnet, daß der oder jeder Querträger (2, 3) aus einem als Formteil ausgebildeten Kern (12) und aus Teilen (13, 14) besteht, die bei der Formung des Kerns (12) in diesen eingesetzt sind, und daß diese Teile (13, 14) zur Montage der Mittel (10) zur Befestigung des Querträgers (3) an dem Mast und zur Montage der Mittel (15) zur Halterung oder Aufhängung eines Leiters (4, 5) der elektrischen Leitung bestimmt sind.

0 184 531

FIG.1

FIG.3

1

FIG.2

0 184 531